# EUROPÄISCHE PATENTSCHRIFT

(11) **EP 1 935 765 B1**
(45) Veröffentlichungstag und Bekanntmachung des Hinweises auf die Patenterteilung: **20.01.2010**
(21) Anmeldenummer: 07023671.6
(22) Anmeldetag: 06.12.2007
(51) Int. Cl.: B62D 35/00

(54) **Luftleitvorrichtung für ein Fahrzeug**
Air conduction device for a vehicle
Dispositif de commande d'air pour véhicule

(30) Priorität: 18.12.2006 DE 102006059724
(43) Veröffentlichungstag der Anmeldung: 25.06.2008
(60) Teilanmeldung: 09007885.8
(73) Patentinhaber: HS Genion GmbH, 82205 Gilching (DE)
(72) Erfinder: Wegener, Fritz, 82205 Gilching (DE)

(56) Entgegenhaltungen:
- WO-A-2006/119746
- DE-U1- 29 909 639
- FR-A- 2 867 442
- FR-A- 2 874 579
- US-A1- 2004 256 885

## Beschreibung

Die Erfindung betrifft eine Luftleitvorrichtung für ein Fahrzeug nach dem Oberbegriff des Patentanspruchs 1.

Eine derartige Luftleiteinrichtung ist aus der Druckschrift FR 2 867442 A1 bekannt und umfasst ein sich in Fahrzeugquerrichtung erstreckendes Spoilerelement, das mittels einer eine Bewegungsbahn vorgebenden Ausstellkinematik aus einer eingefahrenen Ruhestellung in eine maximal ausgefahrene Hubstellung verfahrbar ist. Die Ausstellkinematik umfasst einen Spindelantrieb für eine Hebelanordnung, der zudem mit einer eine Verstelleinrichtung darstellenden Kulissenführung so zusammenwirkt, dass das Spoilerelement bei einer Betätigung des Spindelantriebs neben einer Hubbewegung eine Änderung des Anstellwinkels gegenüber dem Fahrzeugaufbau erfährt.

Aus der DE 10 2004 030 571 A1 ist eine Luftleitvorrichtung bekannt, die im Bereich des Fahrzeughecks unterhalb einer Heckscheibe angeordnet ist und zur Verbesserung der Straßenlage des betreffenden Fahrzeugs dient. Als aerodynamisch wirksames Bauteil umfasst die Luftleitvorrichtung ein sich im Wesentlichen in Fahrzeugquerrichtung erstreckendes Spoilerelement, das mittels einer Ausstellkinematik aus einer eingefahrenen Ruhestellung, in der es beispielsweise von einer Karosseriemulde aufgenommen ist, und einer maximal ausgefahrenen Hubstellung verfahrbar ist, in der es aerodynamisch wirksam ist.

Eine Ausstellkinematik eines Heckspoilers umfasst in bekannter Weise beispielsweise linear bewegliche Hubzylinder oder auch beidseits an dem Spoilerelement angelenkte Viergelenkmechaniken, die die Ausstellbewegung des Spoilerelementes vorgeben. Bei den eine Linearbewegung vorgebenden Hubzylinders ist der Anstellwinkel des Spoilerelementes gegenüber der Fahrzeugkarosserie bzw. den Hubzylindern über die gesamte von der Ausstellkinematik vorgegebene Bewegungsbahn konstant. Es ist nicht möglich, die aerodynamische Wirkung des Spoilerelementes durch Veränderung von dessen Anstellwinkel zu beeinflussen. Bei Einsatz von Viergelenkmechaniken als Ausstellkinematik wird der Anstellwinkel des Spoilerelementes gegenüber der Fahrzeugkarosserie durch die Auslegung der Lenker der Viergelenkmechaniken vorgegeben. Eine unabhängige Anpassung des Anstellwinkels des Spoilerelementes ist nicht möglich.

Der Erfindung liegt die Aufgabe zugrunde, eine Luftleitvorrichtung für ein Fahrzeug bereitzustellen, welche im Vergleich zu dem vorstehend beschriebenen Stand der Technik in optimierter Weise an die jeweils vorliegenden Anforderungen an die Aerodynamik des betreffenden Fahrzeugs angepasst werden kann.

Diese Aufgabe ist erfindungsgemäß durch die Luftleitvorrichtung mit den Merkmalen des Patentanspruchs 1 gelöst.

Die Luftleiteinrichtung nach der Erfindung umfasst also eine Verstelleinrichtung, mittels der der Anstellwinkel des Spoilerelementes gegenüber der Ausstellkinematik einstellbar ist. Die Stellung des Spoilerelementes bzw. Spoilerblatts ist mithin durch die zusätzlich zu der Ausstellkinematik bereitgestellte Verstelleinrichtung veränderbar und damit an die jeweils bestehenden Anforderungen anpassbar, so dass die Aerodynamik und auch die Fahreigenschaften des betreffenden Fahrzeugs durch Veränderung des Anstellwinkels des Spoilerelements verbessert werden können.

Bei einer speziellen Ausführungsform der Luftleitvorrichtung nach der Erfindung arbeitet die Verstelleinrichtung zur Einstellung des Anstellwinkels des Spoilerelementes in Abhängigkeit vom Hub des Spoilerelementes, wobei sie durch die Ausstellkinematik zwangsgesteuert ist. Es erfolgt mithin bei Betätigung der Ausstellkinematik stets eine Veränderung des Anstellwinkels des Spoilerelementes gegenüber der Ausstellkinematik.

Die Ausstellkinematik der erfindungsgemäß ausgebildeten Luftleiteinrichtung umfasst ein linear arbeitendes Antriebselement, insbesondere einen Hubzylinder, der zum Ausstellen des Spoilerelementes eine lineare Bewegung ausführt. Diese lineare Bewegung wird durch eine Zwangssteuerung in eine Schwenkbewegung des Spoilerelementes umgesetzt. Für diese Zwecke sind entsprechende Koppelmechanismen vorzusehen. Beispielsweise umfassen die Koppelmechanismen ein Steuergestänge, das an dem Spoilerelement angelenkt ist und das bei Betätigung der linear arbeitenden Hubeinrichtung durch Zusammenwirken mit einer karosseriefesten Kulissenbahn den Anstellwinkel des Spoilerelementes einstellt. Ein derartiger Koppelmechanismus stellt eine einfach und kostengünstig realisierbare Ausführungsform dar.

Bei der Luftleitvorrichtung nach der Erfindung, die insbesondere große Schwenkwinkel des Spoilerelementes zulässt, ist das Steuergestänge mit seinem dem Spoilerelement abgewandten Ende an einem Steuerhebel angelenkt, der schwenkbar an der Hubeinrichtung gelagert ist und ein in der karosseriefesten Kulissenbahn geführtes Führungselement zur Festlegung seiner Schwenkstellung umfasst.

Die karosseriefeste Kulissenbahn, die die Schwenkbewegung des Spoilerelementes vorgibt und in der das Führungselement des Steuerhebels geführt ist, ist beispielsweise so ausgelegt, dass sie einen im Wesentlichen parallel zur Hubrichtung der Hubeinrichtung angeordneten unteren Abschnitt umfasst, der in einen gegenüber der Hubrichtung der Hubeinrichtung geneigten Verstellabschnitt übergeht. Bei Führung des Führungselementes des Steuerhebels in dem unteren Abschnitt erfolgt keine Schwenkbewegung des Spoilerelementes. Sobald das Führungselement aber in den Verstellabschnitt der Kulissenbahn eintritt, wird der Steuerhebel verschwenkt, so dass über das Steuergestänge eine Schwenkbewegung in das Spoilerelement eingeleitet wird.

Um die gegenüber der Ruhestellung maximal verschwenkte Stellung des Spoilerelementes sichern zu können bzw. das Spoilerelement in einer Verriegelungsstellung halten zu können, schließt sich bei einer vorteilhaften Ausführungsform an der dem unteren Abschnitt abgewandten Seite des Verstellabschnitts der Kulissenbahn ein parallel zur Hubrichtung der Hubeinrichtung ausgerichteter oberer Abschnitt an. Ein Verschwenken des Spoilerelementes bei Anordnung des Führungselementes des Steuerhebels in diesem oberen Abschnitt ist nicht möglich. Vielmehr befindet sich die Verstelleinrichtung in einer Verriegelungsstellung.

Um das Verhältnis von Schwenkbewegung zu Hub des Spoilerelementes verändern zu können, hat das Steuergestänge vorzugsweise einen verstellbaren Anlenkpunkt an dem Steuerhebel.

Bei einer alternativen Ausführungsform der Luftleitvorrichtung nach der Erfindung, die mit einer linear arbeitenden Hubeinrichtung für das Spoilerelement versehen ist, ist eine hubeinrichtungsfeste Führungsbahn vorgesehen, in welcher das dem Spoilerelement abgewandte Ende des Steuergestänges geführt ist, wobei das dem Spoilerelement abgewandte Ende bei Betätigen der Hubeinrichtung zum Einstellen des Anstellwinkels des Spoilerelementes zudem in der karosseriefesten Kulissenbahn geführt ist. Die hubeinrichtungsfeste Führungsbahn ist beispielsweise an einer von einem Hubzylinder in radialer Richtung vorspringenden Lagerlasche ausgebildet.

Um auch bei dieser Ausführungsform das Verhältnis von Anstellwinkel zu Hub des Spoilerelementes einstellen zu können, ist es vorteilhaft, wenn ein verstellbarer Anlenkpunkt des Steuergestänges an dem Spoilerelement vorgesehen ist.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Luftleitvorrichtung nach der Erfindung sind in den Zeichnungen schematisch vereinfacht dargestellt und werden in der nachfolgenden Beschreibung näher erläutert. Es zeigt
- Fig. 1: eine perspektivische Ansicht eines Heckbereichs eines Kraftfahrzeugs mit einer ein ausstellbares Spoilerelement aufweisenden Luftleitvorrichtung;
- Fig. 2: einen schematischen Schnitt durch die Luftleitvorrichtung des in Fig. 1 dargestellten Fahrzeugs;
- Fig. 3: einen schematischen Schnitt durch eine zweite Ausführungsform einer Luftleitvorrichtung;
- Fig. 4: einen schematischen Schnitt durch eine dritte Ausführungsform einer Luftleitvorrichtung;
- Fig. 5: einen schematischen Schnitt durch eine mittels einer Viergelenkmechanik ausstellbaren Luftleitvorrichtung; und
- Fig. 6: eine alternative Ausführungsform einer mittels einer Viergelenkmechanik ausstellbaren Luftleitvorrichtung.

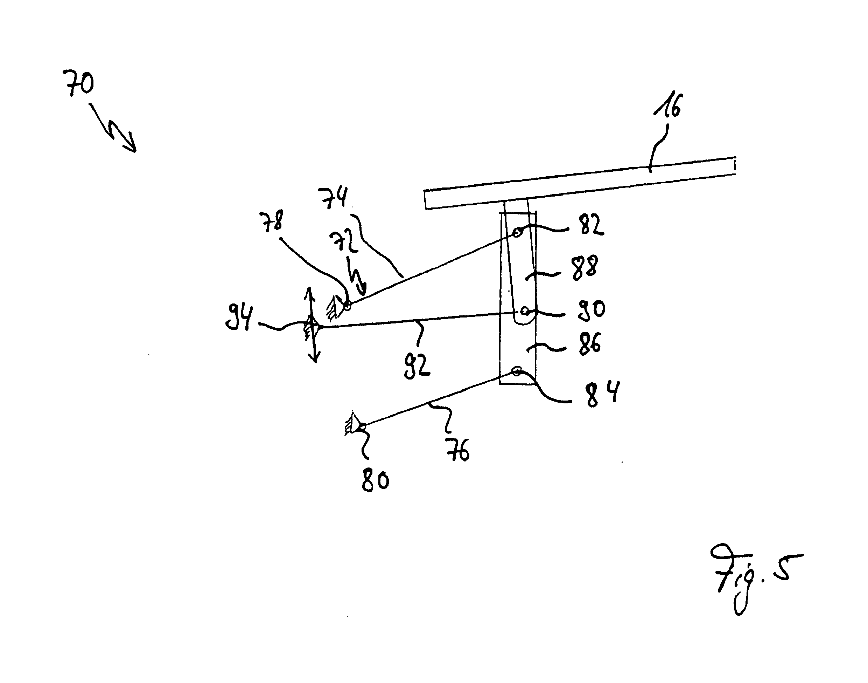

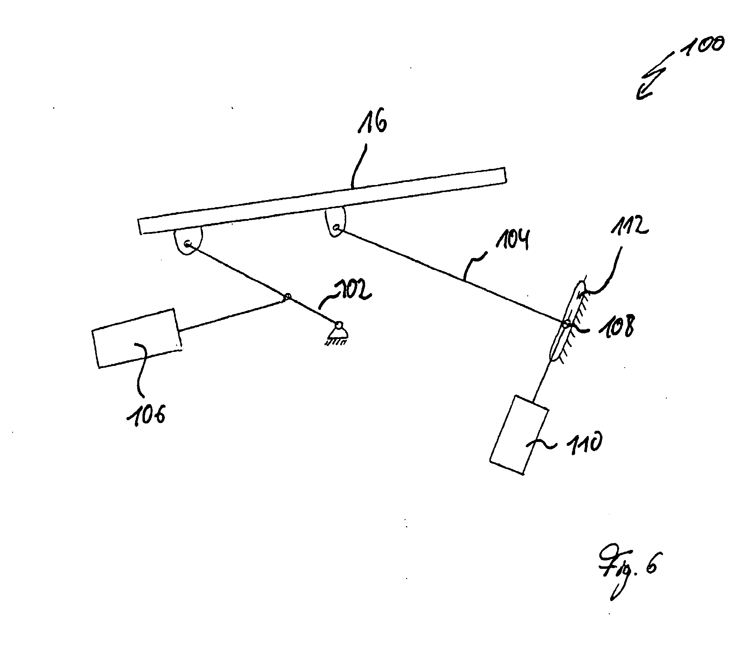

Die Figuren 5 und 6 sind nicht Teil der Erfindung.

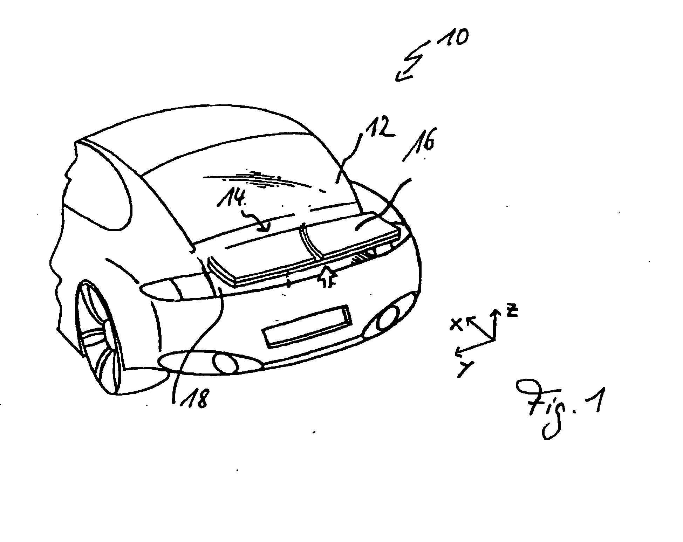

In Fig. 1 ist ein Kraftfahrzeug 10 dargestellt, das heckseitig unterhalb einer Heckscheibe 12 eine einen Heckspoiler darstellende Luftleitvorrichtung aufweist. Die Luftleitvorrichtung 14 umfasst ein sich im Wesentlichen in Fahrzeugquerrichtung erstreckendes Spoilerblatt bzw. -element 16, das mittels einer beidseits angeordneten Ausstellkinematik zwischen einer in einer heckseitigen Karosseriemulde 18 angeordneten Ruhestellung und einer ausgestellten Betriebsstellung, die eine aerodynamisch wirksame Position darstellt, verfahrbar ist.

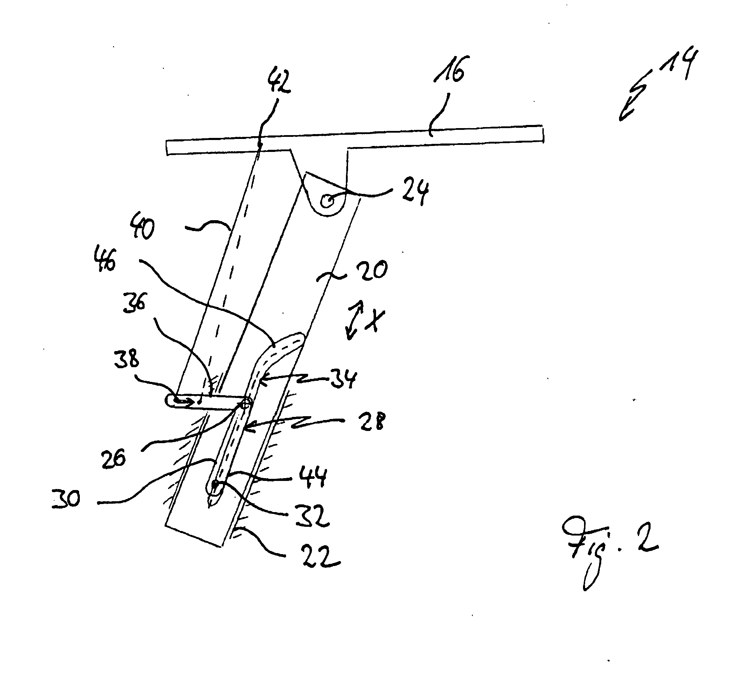

Wie Fig. 2 zu entnehmen ist, umfasst die Ausstellkinematik zum Ausfahren des Spoilerblatts 16 beidseits symmetrisch bezüglich einer Fahrzeuglängsmittelebene jeweils einen als linear arbeitende Hubeinrichtung dienenden Hubzylinder 20, der gemäß einem Doppelpfeil X mittels einer nicht näher dargestellten, hydraulischen oder elektrischen Betätigungseinrichtung in einer karosseriefesten Führungsbahn 22 verfahrbar ist.

An seinem oberen Ende ist an dem Hubzylinder 20 über ein Gelenk 24, dessen Schwenkachse sich in Fahrzeugquerrichtung erstreckt, das Spoilerelement 16 schwenkbar angelenkt.

Des Weiteren ist an dem Hubzylinder 20 in einem von dem Gelenk 24 entfernten Bereich über ein Gelenk 26 ein als Winkel ausgebildeter Steuerhebel 28 angelenkt, dessen einer Schenkel 30 in seinem dem Gelenk 26 abgewandten Endbereich einen Führungszapfen 32 aufweist, der in einer karosseriefesten Kulissenbahn 34 geführt ist. Der zweite Schenkel 36 des Steuerhebels 28 weist in seinem dem Gelenk 26 abgewandten Endbereich einen in Richtung der Achse des Schenkels 36 verstellbaren Anlenkpunkt 38 für ein Steuergestänge 40 auf, welches den Schenkel 36 des Steuerhebels 28 mit dem Spoilerelement 16 verbindet. Hierzu ist an dem Spoilerelement 16 ein Anlenkpunkt 42 ausgebildet.

Die Kulissenbahn 34 weist einen parallel zur Bewegungsrichtung X des Hubzylinders 20 ausgerichteten unteren Abschnitt 44 auf, der oben in einen gebogenen und bezüglich der Bewegungsrichtung X des Hubzylinders 20 geneigten Verstellabschnitt 46 übergeht.

Die in Fig. 2 dargestellte Luftleitvorrichtung 14 arbeitet in nachfolgend beschriebener Weise.

Ausgehend von der dargestellten und abgesenkten Ruhestellung des Spoilerelementes 16 wird der Hubzylinder 20 gemäß der Bewegungsrichtung X angehoben. Hierbei gleitet der Führungszapfen 32 des Steuerhebels 28 zunächst in dem unteren Abschnitt 44 der Kulissenbahn 34, wobei der Steuerhebel 28 seine Position gegenüber dem die Ausstellkinematik darstellenden Hubzylinder 20 beibehält. Sobald der Führungszapfen 32 bei der Hubbewegung des Hubzylinders 20 in den Verstellabschnitt 46 der Kulissenbahn 34 kommt, erfährt der Steuerhebel 28 einen Schwenkbewegung, die über das Steuergestänge 40 auf das Spoilerelement 16 übertragen wird, so dass auch das Spoilerelement 16 im vorliegenden Fall entgegen dem Uhrzeigersinn verschwenkt wird.

Das Verhältnis zwischen dem Hub und dem durch den Verstellabschnitt 46 eingestellten Schwenkwinkel des Spoilerelementes 16 kann durch eine Veränderung des Anlenkpunkts 38 des Steuergestänges 40 an dem Schenkel 36 des Steuerhebels 28 verändert werden.

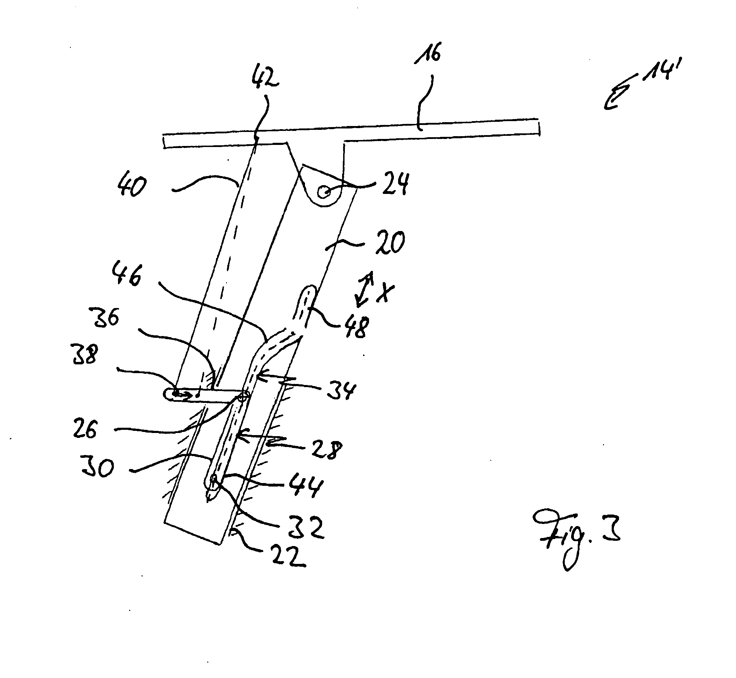

Das in Fig. 3 dargestellte Ausführungsbeispiel einer Luftleitvorrichtung 14' unterscheidet sich von derjenigen nach Fig. 2 lediglich dadurch, dass sich an dem gekrümmten Verstellabschnitt 46 der Kulissenbahn 34 oben ein ebenfalls parallel zur Bewegungsrichtung des Hubzylinders 20 angeordneter Verriegelungsabschnitt 48 anschließt, so dass erreicht werden kann, dass die von dem Steuergestänge 40 und dem Steuerhebel 28 gebildete Verstelleinrichtung für den Anstellwinkel des Spoilerelementes 16 verriegelt ist, wenn der Führungszapfen 32 des Steuerhebels 28 in dem Verriegelungsabschnitt 48 angeordnet ist. Damit wird ein versehentliches Verschwenken des Spoilerelementes 16 gegenüber dem Hubzylinder 20 verhindert.

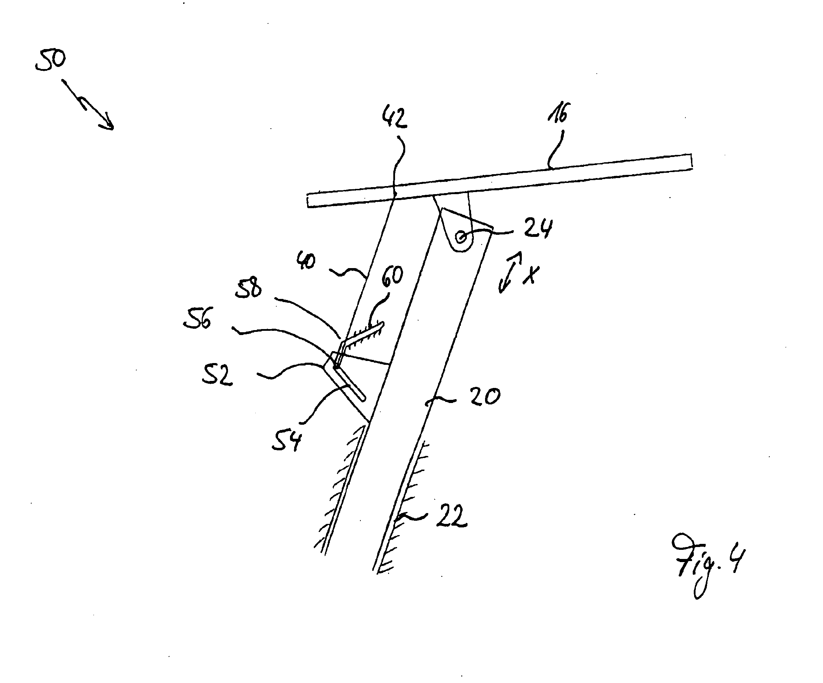

In Fig. 4 ist eine alternative Ausführungsform einer Luftleitvorrichtung 50 dargestellt, die entsprechend den vorstehend beschriebenen Ausführungsbeispielen ein Spoilerelement 16 aufweist, das über ein Gelenk 24 an einem Hubzylinder 20 angelenkt ist, der zum Ausfahren oder Einfahren des Spoilerelementes 16 gemäß einem Doppelpfeil X verfahrbar ist. Der Hubzylinder 20 weist eine in radialer Richtung abstehende Lasche 52 auf, an der eine hubzylinderfeste Führungsbahn 54 ausgebildet ist, die gegenüber der Achse des Hubzylinders 20 geneigt ist. In der Führungsbahn 54 ist ein Führungszapfen 56 geführt, der an einem Ende eines Steuergestänges 40 ausgebildet ist, welches mit dem dem Führungszapfen 56 abgewandten Ende über einen Anlenkpunkt 42 an dem Spoilerelement 16 angelenkt ist. Der Anlenkpunkt 42 ist veränderbar bzw. verstellbar.

Des Weiteren weist die Luftleitvorrichtung 50 eine karosseriefeste Kulissenbahn 58 auf, die einen unteren, parallel zur Achse und damit zur Bewegungsrichtung X des Hubzylinders 20 ausgerichteten Abschnitt aufweist, an dem sich oben ein gegenüber der Achse des Hubzylinders 20 geneigter und gegenläufig zu der Führungsbahn 54 ausgerichteter Verstellbereich 58 anschließt. Beim Betätigen des Hubzylinders 20 ist der Führungszapfen 56, der am unteren Ende des Steuergestänges 40 ausgebildet ist, auch in der Kulissenbahn 58 geführt, wobei die Führung in dem Verstellbereich 60 ein Verschwenken und damit ein Ändern des Anstellwinkels des Spoilerelementes 16 bewirkt.

In Fig. 5 ist eine Luftleitvorrichtung 70 dargestellt, die ebenfalls ein Spoilerelement 16 aufweist, das aus einer eingefahrenen Ruhestellung in eine ausgefahrene Hubstellung bzw. Wirkstellung verfahrbar ist. Die Luftleitvorrichtung 70 weist hierzu eine Ausstellkinematik auf, die mit einer Viergelenkmechanik 72 ausgebildet ist, welche zwei Lenker 74 und 76 aufweist, die jeweils mit einem Ende über ein Gelenk 78 bzw. 80 karosseriefest angelenkt sind. Mit ihren den Gelenken 78 und 80 abgewandten Enden sind die Lenker 74 und 76 jeweils über ein Gelenk 82 bzw. 84 an einem Koppelelement 86 angelenkt, an welchem wiederum über einen Lenkhebel 88 das Spoilerelement 16 schwenkbar gelagert ist. Der Drehpunkt des Lenkers 74 und derjenige des Lenkhebels 88 an dem Koppelelement 86 liegen auf einer gemeinsamen Achse.

An dem dem Spoilerelement 16 abgewandten Ende ist über ein weiteres Gelenk 90 ein Steuerlenker 92 befestigt, der mit seinem dem Koppelelement 88 abgewandten Enden einen karosseriefest angebundenen Fußpunkt 94 bildet, der zur Veränderung des Verhältnisses von Hub zu Anstellwinkel des Spoilerelementes 16 verstellbar ist.

Die Luftleitvorrichtung 70 arbeitet in nachfolgend beschriebener Weise.

Ausgehend von einer abgesenkten Ruhestellung wird einer der Lenker 74 und 76 der Viergelenkmechanik 72 angetrieben, so dass das Spoilerelement 16 in seine ausgestellte Wirkstellung verfahren wird. Dabei übt der Steuerlenker 92 eine Kraft auf den Lenkhebel 88 aus, so dass sich durch Verschwenken des Lenkhebels 88 um seine Schwenkachse der Anstellwinkel des Spoilerelementes 16 ändert. Beim Einfahren des Spoilerelementes 16 werden bei der in Fig. 5 gezeigten Darstellung die Lenker 74 und 76 im Uhrzeigersinn um die Achsen der Gelenke 78 und 80 verschwenkt, so dass der Lenker 92 eine Zugbewegung auf den Lenkhebel 88 ausübt und das Spoilerelement 16 ebenfalls im Uhrzeigersinn verschwenkt wird.

In Fig. 6 ist eine Luftleitvorrichtung 100 dargestellt, die ebenfalls ein Spoilerelement 16 aufweist, das zwischen einer abgesenkten Ruhestellung und einer ausgestellten Betriebsstellung verschwenkbar ist. Als Ausstellkinematik weist die Luftleitvorrichtung 100 ebenfalls eine Viergelenkmechanik auf, die zwei Lenker 102 und 104 umfasst, die jeweils mit einem Ende an das Spoilerelement 16 angelenkt sind und mit ihrem jeweiligen anderen Ende karosseriefest angelenkt sind.

Der Lenker 102 ist mit einem das Verschwenken der Viergelenkmechanik bewirkenden Antriebsmotor 106 verbunden, der das Ausstellen des Spoilerelementes 16 bewirkt. Der karosseriefeste Anlenkpunkt 108 des nicht angetriebenen Lenkers 104 ist mit einem zweiten Antriebsmotor 110 verbunden, der die Lage des Anlenkpunkts 108 verändern kann. Durch Verschiebung des Anlenkpunkts 108 in einer Führungsbahn 112 verändert sich der Anstellwinkel des Spoilerelementes 16 gegenüber der Fahrzeugkarosserie und damit die aerodynamische Wirkung des Spoilerelementes 16.

### Bezugszeichen

- 10: Kraftfahrzeug
- 12: Heckscheibe
- 14, 14': Leiteinrichtung
- 16: Spoilerelement
- 18: Karosseriemulde
- 20: Hubzylinder
- 22: Führungsbahn
- 24: Gelenk
- 26: Gelenk
- 28: Steuerhebel
- 30: Schenkel
- 32: Führungszapfen
- 34: Kulissenbahn
- 36: Schenkel
- 38: Anlenkpunkt
- 40: Steuergestänge
- 42: Anlenkpunkt
- 44: unterer Abschnitt
- 46: Verstellabschnitt
- 48: Verriegelungsabschnitt
- 50: Luftleitvorrichtung
- 52: Lasche
- 54: Führungsbahn
- 56: Führungszapfen
- 58: Kulissenbahn
- 60: Verstelleinrichtung
- 70: Luftleitvorrichtung
- 72: Viergelenkmechanik
- 74: Lenker
- 76: Lenker
- 78: Gelenk
- 80: Gelenk
- 82: Gelenk
- 84: Gelenk
- 86: Koppelelement
- 88: Lenkhebel
- 90: Gelenk
- 92: Steuerlenker
- 94: Fußpunkt
- 100: Luftleitvorrichtung
- 102: Lenker
- 104: Lenker
- 106: Antriebsmotor
- 108: Anlenkpunkt
- 110: Antriebsmotor
- 112: Führungsbahn

## Patentansprüche

1. Luftleitvorrichtung für ein Fahrzeug, umfassend ein sich im Wesentlichen in Fahrzeugquerrichtung erstreckendes Spoilerelement (16), das mittels einer eine Bewegungsbahn vorgebenden Ausstellkinematik aus einer eingefahrenen Ruhestellung in eine maximal ausgefahrene Hubstellung verfahrbar ist, wobei das Spoilerelement (16) mit einer Verstelleinrichtung versehen ist, bei deren Betätigung der Anstellwinkel des Spoilerelementes (16) gegenüber dem Fahrzeugaufbau verändert wird, die Ausstellkinematik mindestens eine linear arbeitende Hubeinrichtung umfasst und an dem Spoilerelement (16) ein Steuergestänge (40) angelenkt ist, das bei Betätigung der Hubeinrichtung (20) durch Zusammenwirken mit einer karosseriefesten Kulissenbahn (34, 58) den Anstellwinkel des Spoilerelementes (16) einstellt, **dadurch gekennzeichnet, dass** das Steuergestänge (40) mit seinem dem Spoilerelement (16) abgewandten Ende an einen Steuerhebel (28) angelenkt ist, der schwenkbar an der Hubeinrichtung (20) gelagert ist und ein in der karosseriefesten Kulissenbahn (34) geführtes Führungselement (32) zur Festlegung einer Schwenkstellung umfasst.

2. Luftleitvorrichtung nach Anspruch 1, **dadurch gekennzeichnet, dass** die Verstelleinrichtung in Abhängigkeit vom Hub des Spoilerelementes (16) arbeitet und durch die Ausstellkinematik zwangsgesteuert ist.

3. Luftleitvorrichtung nach Anspruch 1 oder 2, **dadurch gekennzeichnet, dass** die Hubeinrichtung ein Hubzylinder (20) ist, der zum Ausstellen des Spoilerelementes (16) eine lineare Bewegung ausführt.

4. Luftleitvorrichtung nach Anspruch 1, **dadurch gekennzeichnet, dass** die karosseriefeste Kulissenbahn (34), in der das Führungselement (32) des Steuerhebels (28) geführt ist, eine im Wesentlichen parallel zur Hubrichtung der Hubeinrichtung (20) ausgerichteten, unteren Abschnitt (44) umfasst, der in einen gegenüber der Hubbewegung der Hubeinrichtung (20) geneigten Verstellabschnitt (46) übergeht.

5. Luftleitvorrichtung nach Anspruch 4, **dadurch gekennzeichnet, dass** sich an der dem unteren Abschnitt (44) abgewandten Seite des Verstellabschnitts (46) ein parallel zur Bewegungsrichtung der Hubeinrichtung (20) ausgerichteter, oberer Abschnitt (48) der Kulissenbahn (34) anschließt.

6. Luftleitvorrichtung nach Anspruch 1, **dadurch gekennzeichnet, dass** das Steuergestänge (40) einen verstellbaren Anlenkpunkt (38) an dem Steuerhebel (28) hat.

7. Luftleitvorrichtung nach Anspruch 1, **dadurch gekennzeichnet, dass** eine hubeinrichtungsfeste Führungsbahn (54) vorgesehen ist, in der das dem Spoilerelement (16) abgewandte Ende (56) des Steuergestänges (40) geführt ist, wobei das dem Spoilerelement (16) abgewandte Ende (56) beim Betätigen der Hubeinrichtung (20) zum Einstellen des Anstellwinkels des Spoilerelementes (16) zudem in der karosseriefesten Kulissenbahn (58) geführt ist.

8. Luftleitvorrichtung nach Anspruch 7, **gekennzeichnet durch** einen verstellbaren Anlenkpunkt (42) des Steuergestänges (40) an dem Spoilerelement (16).

## Claims

1. Air guiding device for a motor vehicle, comprising a spoiler element (16) which extends substantially in the vehicle transverse direction and which can be moved by means of a setting-out kinematic arrangement, which predefines a movement path, from a retracted rest position into a maximum deployed lifted position, with the spoiler element (16) being provided with an adjusting device, the actuation of which causes the angle of incidence of the spoiler element (16) with respect to the vehicle body to be varied, with the setting-out kinematic arrangement comprising at least one linearly-acting lifting device and with a control rod (40) being articulately connected to the spoiler element (16), which control rod (40), when the lifting device (20) is actuated, sets the angle of incidence of the spoiler element (16) by interacting with a slotted guide track (34, 58) which is fixed to the body, **characterized in that** the control rod (40) is articulatedly connected with its end remote from the spoiler element (16) to a control lever (28) which is pivotably mounted on the lifting device (20) and comprises a guide element (32), which is guided in the slotted guide track (34) which is fixed to the body, in order to define a pivoting position.

2. Air guiding device according to Claim 1, **characterized in that** the adjusting device operates as a function of the lift of the spoiler element (16) and is positively controlled by the setting-out kinematic arrangement.

3. Air guiding device according to Claim 1 or 2, **characterized in that** the lifting device is a lifting cylinder (20), which performs a linear movement in order to set out the spoiler element (16).

4. Air guiding device according to Claim 1, **characterized in that** the slotted guide track (34) which is fixed to the body and in which the guide element (32) of the control lever (28) is guided comprises a lower section (44) which is aligned substantially parallel to the lifting direction of the lifting device (20) and which merges into an adjusting section (46) which is inclined with respect to the lifting movement of the lifting device (20).

5. Air guiding device according to Claim 4, **characterized in that that** side of the adjusting section (46) which is remote from the lower section (44) is adjoined by an upper section (48), which is aligned parallel to the movement direction of the lifting device (20), of the slotted guide track (34).

6. Air guiding device according to Claim 1, **characterized in that** the control rod (40) has an adjustable articulation point (38) on the control lever (28).

7. Air guiding device according to Claim 1, **characterized in that** a guide track (54) which is fixed in terms of lifting direction is provided, in which guide track (54) is guided that end (56) of the control rod (40) which is remote from the spoiler element (16), with that end (56) which is remote from the spoiler element (16), during the actuation of the lifting device (20) for setting the angle of incidence of the spoiler element (16), additionally being guided in the slotted guide track (58) which is fixed to the body.

8. Air guiding device according to Claim 7, **characterized by** an adjustable articulation point (42) of the control rod (40) on the spoiler element (16).

## Revendications

1. Dispositif de conduction d'air pour un véhicule, comprenant un élément déflecteur (16) s'étendant essentiellement dans la direction transversale du véhicule, lequel peut être déplacé au moyen d'une cinématique de déploiement prédéfinissant une piste de déplacement d'une position de repos rentrée dans une position de levage sortie au maximum, l'élément déflecteur (16) étant pourvu d'un dispositif de réglage dont l'actionnement permet de faire varier l'angle d'inclinaison de l'élément déflecteur (16) par rapport à la carrosserie du véhicule, la cinématique de déploiement comprenant au moins un dispositif de levage travaillant linéairement, et une tringlerie de commande (40) étant articulée à l'élément déflecteur (16), laquelle, lors de l'actionnement du dispositif de levage (20) par coopération avec une piste à coulisse (34, 58) fixée à la carrosserie ajuste l'angle d'inclinaison de l'élément déflecteur (16), **caractérisé en ce que** la tringlerie de commande (40) est articulée par son extrémité opposée à l'élément déflecteur (16) à un levier de commande (28), qui est monté de manière pivotante sur le dispositif de levage (20) et qui comprend un élément de guidage (32) guidé dans la piste à coulisse (34) fixée à la carrosserie pour fixer une position de pivotement.

2. Dispositif de conduction d'air selon la revendication 1, **caractérisé en ce que** le dispositif de réglage fonctionne en fonction de la course de l'élément déflecteur (16) et est commandé par force par la cinématique de déploiement.

3. Dispositif de conduction d'air selon la revendication 1 ou 2, **caractérisé en ce que** le dispositif de levage est un cylindre de levage (20), qui effectue un mouvement linéaire pour déployer l'élément déflecteur (16).

4. Dispositif de conduction d'air selon la revendication 1, **caractérisé en ce que** la piste à coulisse (34) fixée à la carrosserie, dans laquelle est guidé l'élément de guidage (32) du levier de commande (28), comprend une portion inférieure (44) orientée essentiellement parallèlement à la direction de levage du dispositif de levage (20), laquelle se prolonge par une portion de réglage (46) inclinée par rapport au mouvement de levage du dispositif de levage (20).

5. Dispositif de conduction d'air selon la revendication 4, **caractérisé en ce qu'**une portion supérieure (48) de la piste à coulisse (34), orientée parallèlement à la direction de déplacement du dispositif de levage (20), se raccorde au côté de la portion de réglage (46) opposé à la portion inférieure (44).

6. Dispositif de conduction d'air selon la revendication 1, **caractérisé en ce que** la tringlerie de commande (40) a un point d'articulation réglable (38) sur le levier de commande (28).

7. Dispositif de conduction d'air selon la revendication 1, **caractérisé en ce qu'**il est prévu une piste de guidage (54) fixée au dispositif de levage, dans laquelle est guidée l'extrémité (56) de la tringlerie de commande (40) opposée à l'élément déflecteur (16), l'extrémité (56) opposée à l'élément déflecteur (16) étant guidée en outre dans la piste à coulisse (58) fixée à la carrosserie lors de l'actionnement du dispositif de levage (20) pour l'ajustement de l'angle d'inclinaison de l'élément déflecteur (16).

8. Dispositif de conduction d'air selon la revendication 7, **caractérisé par** un point d'articulation réglable (42) de la tringlerie de commande (40) sur l'élément déflecteur (16).
